# EUROPÄISCHE PATENTSCHRIFT

(11) **EP 1 336 552 B1**
(45) Veröffentlichungstag und Bekanntmachung des Hinweises auf die Patenterteilung: **05.04.2006**
(21) Anmeldenummer: 02027369.4
(22) Anmeldetag: 09.12.2002
(51) Int. Cl.: B62D 33/06

(54) **Innenverkleidungssystem für Fahrerhäuser von Nutzfahrzeugen**
System for the interior panels of the drivers cabin of a truck
Système de panneaux intérieurs pour cabine de camion

(30) Priorität: 15.02.2002 DE 10206196
(43) Veröffentlichungstag der Anmeldung: 20.08.2003
(73) Patentinhaber: DaimlerChrysler AG, 70567 Stuttgart (DE)
(72) Erfinder: Mattedi, Markus, 72141 Walddorfhäslach (DE); Özkolacik, Mahir, 70771 Leinfelden-Echterdingen (DE); Rastetter, Ina, 75382 Althengstett (DE); Weissmann, Dieter, 71263 Weil der Stadt (DE); Zygan, Andreas, Dr., 76316 Malsch (DE)

(56) Entgegenhaltungen:
- EP-A- 0 440 836
- US-A- 5 825 096

## Beschreibung

Die Erfindung betrifft ein Innenverkleidungssystem für Fahrerhäuser von Nutzfahrzeugen, insbesondere Lastkraftwagen, mit einem Dachverkleidungselement, wenigstens einem Seitenwandverkleidungselement und einem Rückwandverkleidungselement.

Eine Fahrerhaus-Baureihe für Frontlenker-Lastkraftwagen ist aus der DE 36 17 961 A1 bekannt. Hierbei ist zur Verringerung des Werkzeugaufwandes und zum Erreichen einer Serienfertigung unter weitestgehender Automatisierung das Rohhaus des Lastkraftwagens, welches aus einer Rückwand, zwei Seitenwänden, einer Frontwand, einer Dachgruppe und einer Bodengruppe besteht, durch eine Anzahl standardisierter Funktionsmodule ergänzt, die unverändert an Fahrerhäusern unterschiedlicher Größe anbaubar sind.

Die DE 199 57 854 A1 beschreibt ein modulares Ablagesystem in Fahrerhäusern von Nutzfahrzeugen, das sich über die gesamte Breite quer zur Fahrtrichtung oberhalb einer Windschutzscheibe erstreckt und aus- und einbaufähige Ablageschalen aufweist, die zum Erreichen einer gegenseitigen Austauschbarkeit gleiche Breiten aufweisen. Dadurch soll dieses Ablagesysteme für unterschiedliche Einsatzbedingungen von Rechts- und Linkslenkerfahrzeugen abstimmbar sein.

Die DE 37 21 377 A1 beschreibt ein Fahrerhaus für Nutzfahrzeuge mit einer frontseitigen Dachablage, bei welchem zum Erreichen einer Ablagemöglichkeit auf der Beifahrerseite der beifahrerseitige Bereich der Dachablage um eine vordere Querachse hochklappbar ausgebildet ist.

Aus der EP 0 640 049 B1 ist ein modularer Konstruktionsaufbau für ein Fahrerhaus bekannt, bei dem das Fahrerhaus mit einer Schlafkabine mittels einer Kopplungseinheit gekoppelt ist.

In der US-PS 5,150,942 ist ein Sicherheits-Fahrerhaus beschrieben, welches aus einem Rahmen mit daran angebrachten Einzelteilen des Fahrerhauses besteht.

Bei sämtlichen der bekannten Fahrerhäuser wird jedoch nicht näher auf die Ausgestaltung der Verkleidungselemente eingegangen, die im Innenraum solcher Fahrerhäuser an den metallischen Rohbauteilen angebracht werden. Solche Verkleidungen werden verwendet, um einerseits das Rohblech im Innenraum abzudecken und um andererseits dem Fahrer Ablagemöglichkeiten für die verschiedensten Gegenstände zu bieten.

Es ist Aufgabe der vorliegenden Erfindung, ein Innenverkleidungssystem für Fahrerhäuser von Nutzfahrzeugen, insbesondere Lastkraftwagen, zu schaffen, mittels welchem unterschiedliche Typen von Fahrerhäusern in einfacher und insbesondere kostengünstiger Weise ausgekleidet werden können.

Erfindungsgemäß wird diese Aufgabe durch die in Anspruch 1 genannten Merkmale gelöst.

Durch das erfindungsgemäße Innenverkleidungssystem mit den Verkleidungselementen, von welchen wenigstens eines modulartig mit einem Hauptteil und einem Zusatzteil ausgebildet ist, ist es möglich, dieselben Einzelteile von Verkleidungselementen für verschiedene Fahrerhäuser zu verwenden, so daß sich für mehrere unterschiedliche Fahrerhäuser gemeinsam betrachtet eine Verringerung unterschiedlicher Teile ergibt. Diese Teileverringerung bringt weitere Vorteile mit sich, beispielsweise die Verringerung der erforderlichen Werkzeuge oder der eingesetzten Verbindungsteile, so daß jedes einzelne Fahrerhaus kostengünstiger ausgekleidet werden kann.

Das erfindungsgemäße System ermöglicht außerdem eine Vereinfachung der Montage, wobei aufgrund des modulartigen Aufbaus und der sich daraus ergebenden Vereinheitlichung der einzelnen Bauteile die Nachrüstung elektrischer Komponenten in einfacher Weise möglich ist. Hierbei können die einzelnen Teile der Verkleidungselemente auf Wunsch ausgetauscht werden, so daß unterschiedliche Innenausstattungen für das jeweilige Fahrerhaus möglich sind.

Da gerade im Dachbereich von Fahrerhäusern die größte Variationsmöglichkeit besteht, hat es sich als besonders vorteilhaft erwiesen, wenn das modulartig aufgebaute Verkleidungselement das Dachverkleidungselement ist.

Wenn in einer weiteren vorteilhaften Ausgestaltung der Erfindung die Trennebene senkrecht zu einer Längsrichtung des Nutzfahrzeugs verläuft, so können Längenänderungen des Fahrerhauses in einfacher Weise durch Anbringen des Zusatzteils ausgeglichen werden.

Um auch unterschiedliche Höhen der verschiedenen Typen von Fahrerhäusern ausgleichen zu können, kann in einer weiteren vorteilhaften Ausgestaltung der Erfindung vorgesehen sein, daß ein weiteres Zusatzteil vorgesehen ist, wobei zwischen dem Hauptteil und dem weiteren Zusatzteil eine weitere, senkrecht zu einer Hochrichtung des Lastkraftwagens verlaufende Trennebene vorgesehen ist.

Weitere vorteilhafte Ausgestaltungen und Weiterbildungen der Erfindung ergeben sich aus den restlichen Unteransprüchen sowie aus den nachfolgend anhand der Zeichnung prinzipmäßig dargestellten Ausführungsbeispielen.

Es zeigt:
- Fig. 1: Eine schematische Darstellung eines Fahrerhauses mit einem erfindungsgemäßen Verkleidungssystem;
- Fig. 2: ein Dachverkleidungselement mit einem ersten Zusatzteil;
- Fig. 3: ein Dachverkleidungselement mit einem zweiten Zusatzteil;
- Fig. 4: ein Dachverkleidungselement mit zwei Zusatzteilen;
- Fig. 5: ein Rückwandverkleidungselement in einer ersten Ausführungsform;
- Fig. 6: ein Rückwandverkleidungselement in einer zweiten Ausführungsform; und
- Fig. 7: ein Rückwandverkleidungselement in einer dritten Ausführungsform.

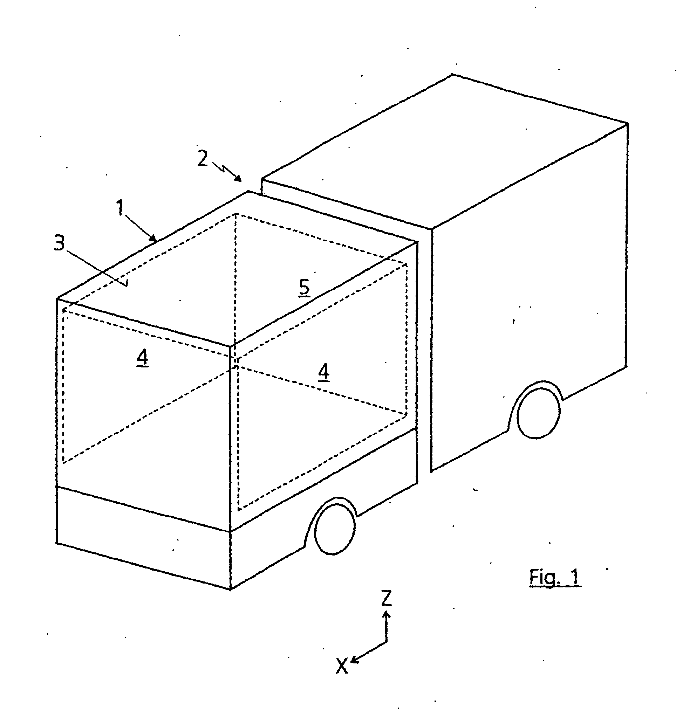

Fig. 1 zeigt in sehr schematischer Darstellung ein Fahrerhaus 1 für ein Nutzfahrzeug 2, im vorliegenden Fall für einen ebenfalls nur schematisch dargestellten Lastkraftwagen. Die Innenseiten des Fahrerhauses 1 sind mit mehreren Verkleidungselementen, nämlich einem Dachverkleidungselement 3, zwei Seitenverkleidungselementen 4 und einem Rückwandverkleidungselement 5 ausgekleidet, um das vorhandene, Blech im Innenraum des Fahrerhauses 1 zu verkleiden und um dem Fahrer des Nutzfahrzeuges 2 später noch näher erläuterte Ablagemöglichkeiten zu bieten. Hierzu sind die Verkleidungselemente 3, 4 und 5 an den Rohbau des Fahrerhauses 1 angepaßt.

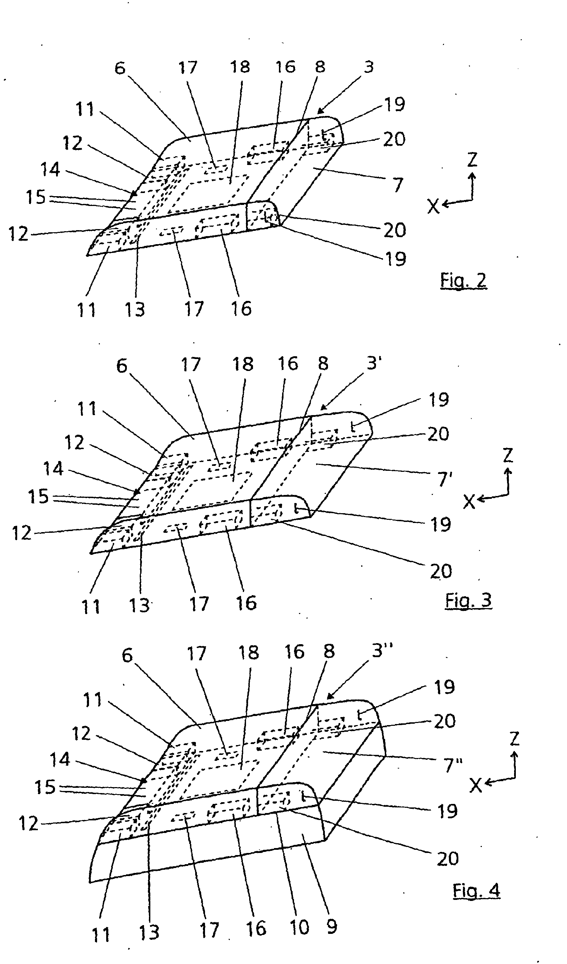

In Fig. 2 ist das Dachverkleidungselement 3 dargestellt, welches modulartig ausgebildet ist und ein Hauptteil 6 sowie ein Zusatzteil 7 aufweist, welches im Bereich einer Trennebene 8 auswechselbar an dem Hauptteil 6 angebracht ist. Die Trennebene 8 verläuft im wesentlichen senkrecht zu einer mit "X" bezeichneten Längsrichtung des Nutzfahrzeuges 2, wobei sich das Hauptteil 6 im vorderen Bereich des Fahrerhauses 1 und das Zusatzteil 7 im hinteren Bereich desselben befindet. Auf die weiteren Einzelheiten des Dachverkleidungselements 3 wird zu einem späteren Zeitpunkt näher eingegangen.

Fig. 3 zeigt ein Dachverkleidungselement 3', welches dasselbe Hauptteil 6 wie das Dachverkleidungselement 3 aufweist, an welchem im Bereich der Trennebene 8 jedoch ein längeres Zusatzteil 7' angebracht ist, um das Dachverkleidungselement 3' an ein in X-Richtung verlängertes, also größeres, nicht dargestelltes Fahrerhaus anzupassen. Um das Dachverkleidungselement 3' an ein anderes Fahrerhaus anzupassen, ist es aufgrund des prinzipiell modulartigen Aufbaus aller Dachverkleidungselemente 3 lediglich erforderlich, das Zusatzteil 7' statt des Zusatzteiles 7 an dem Hauptteil 6 anzubringen wobei das Hauptteil 6 immer identisch ist.

Fig. 4 zeigt ein weiteres Dachverkleidungselement 3'', welches zusätzlich zu dem ersten Zusatzteil 7' gemäß Fig. 3 ein weiteres Zusatzteil 9 aufweist. Das Zusatzteil 9 ist im Bereich einer weiteren, in diesem Fall senkrecht zu einer mit "Z" bezeichneten Hochrichtung des Nutzfahrzeugs 2 verlaufenden Trennebene 10 mit dem Hauptteil 6 verbunden. Auf diese Weise wird das Dachverkleidungselement 3" an ein auch in diesem Fall nicht dargestelltes Fahrerhaus angepaßt, das nicht nur eine größere Länge, sondern auch eine größere Höhe als das in Fig. 1 dargestellte Fahrerhaus 1 aufweist. Alternativ kann das Dachverkleidungselement 3'' auch dazu verwendet werden, das Fahrerhaus mit einem niedrigeren Dach auszustatten. Theoretisch wäre auch eine Kombination des kurzen Dachverkleidungselements 3 aus Fig. 2 mit dem Zusatzteil 9 denkbar, diese Kombination ist jedoch nicht dargestellt.

Die Dachverkleidungselemente 3, 3' und 3'' sind im vorderen Bereich des Hauptteils 6 jeweils mit folgenden identischen Elementen versehen: Zwei Lautsprechern 11, zwei Ablagefächern 12, einem Beleuchtungskörper 13, der eine indirekte Beleuchtung für das jeweilige Fahrerhaus schafft, und einem Ablagefach 14, in welches wahlweise mehrere DIN-Einbauschächte 15 für entsprechende Geräte einsetzbar sind.

Im mittleren Bereich weist das Hauptteil 6 bei sämtlichen Dachverkleidungselementen 3, 3' und 3'' zwei seitliche Ablagefächer 16, mehrere Beleuchtungskörper 17 sowie eine Dachluke 18 auf. Die Zusatzteile 7 und 7' weisen jeweilige Kleiderhaken 19 sowie weitere Lautsprecher 20 auf. Das Zusatzteil 9 des Dachverkleidungselements 3'' ist außerdem mit weiteren Ablagefächern 21 versehen.

Selbstverständlich kann bei jedem einzelnen der Dachverkleidungselemente 3, 3' und 3" auf einzelne der beschriebenen Bauteile verzichtet werden, dieselben können anders angeordnet sein bzw. es können andere, nicht dargestellte Elemente vorgesehen sein, wie z.B.

Ablagetaschen, Lüftungsdüsen oder dergleichen. Somit sind die Dachverkleidungselemente 3, 3' und 3'' nicht nur bezüglich ihres Aufbaus sondern auch bezüglich ihrer Ausstattung modular aufgebaut. Bei der Montage werden die einzelnen Dachverkleidungselemente 3, 3' und 3" im Regelfall als vormontierte Baugruppen im Fahrerhaus 1 befestigt.

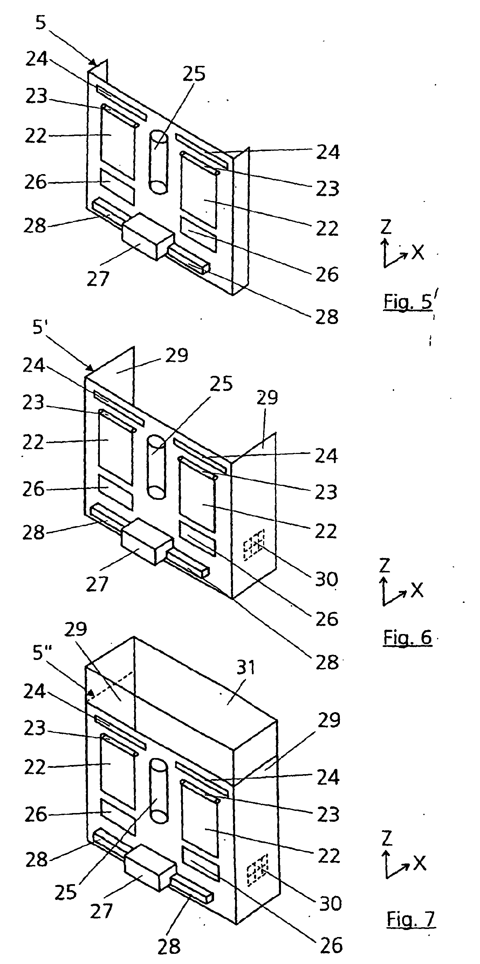

Fig. 5 zeigt eine erste Ausführungsform des Rückwandverkleidungselements 5, welches mit zwei Ausnehmungen 22 für entsprechende, nicht dargestellte Rückfenster des Fahrerhauses 1 versehen ist. Beide Ausnehmungen 22 sind im vorliegenden Fall mit jeweiligen Rollos 23 verschließbar. Zusätzlich ist das Rückwandverkleidungselement 5 mit Entlüftungsschlitzen 24, einem Feuerlöscher 25 und mehreren Ablagefächern 26 versehen. Schließlich ist im unteren Bereich des Rückwandverkleidungselements 5 noch eine Standheizung 27 mit entsprechenden Luftkanälen 28 angeordnet.

Fig. 6 zeigt eine alternative Ausführungsform eines Rückwandverkleidungselements 5' für ein wiederum nicht dargestelltes Fahrerhaus, welches in X-Richtung verlängert ist. Es handelt sich hierbei um das Fahrerhaus, für welches das Dachverkleidungselement 3' gemäß Fig. 3 konzipiert ist. Aus diesem Grund ist das Rückwandverkleidungselement 5 in Längsrichtung "X" des Nutzfahrzeuges 2 mittels zweier Seitenteile 29 verlängert. Zusätzlich zu den bereits oben erwähnten Bauteilen 22, 23, 24, 25, 26, 27 und 28 ist das Rückwandverkleidungselement 5' im Bereich der Seitenteile 29 mit einem Bedienfeld 30 versehen. Des weiteren können die Ablagefächer 26 gegenüber dem Rückwandverkleidungselement 5 vergrößert ausgeführt sein.

Eine weitere Ausführungsform eines Rückwandverkleidungselements 5'' zeigt Fig. 7, wobei hier im oberen Bereich eine klappbare Liege 31 vorgesehen ist. Ansonsten ist das Rückwandverkleidungselement 5" identisch mit dem Rückwandverkleidungselement 5' gemäß Fig. 6 ausgeführt und kann z.B. für das Fahrerhaus konzipiert sein, für welches auch das Dachverkleidungselement 3'' gemäß Fig. 4 ausgeführt ist.

## Patentansprüche

1. Innenverkleidungssystem für Fahrerhäuser (1) von Nutzfahrzeugen, insbesondere Lastkraftwagen, mit einem Dachverkleidungselement (3,3',3"), wenigstens einem Seitenwandverkleidungselement (4) und einem Rückwandverkleidungselement (5, 5' ,5''), wobei für verschiedene Größen und/oder Formen des Fahrerhauses (1) unterschiedliche Typen der einzelnen Verkleidungselemente (3,3',3",4,5,5',5") eingesetzt werden, wobei wenigstens eines der Verkleidungselemente (3,3',3'',4,5,5',5'') modulartig mit einem Hauptteil (6) und wenigstens einem an dem Hauptteil (6) im Bereich einer Trennebene (8,10) auswechselbar anbringbaren Zusatzteil (7) ausgebildet ist.

2. Innenverkleidungssystem nach Anspruch 1,
**dadurch gekennzeichnet, daß**
das modulartig aufgebaute Verkleidungselement (3,3',3'',4,5,5',5'') das Dachverkleidungselement (3,3',3'') ist.

3. Innenverkleidungssystem nach Anspruch 2,
**dadurch gekennzeichnet, daß**
die Trennebene (8) senkrecht zu einer Längsrichtung (x) des Lastkraftwagens verläuft.

4. Innenverkleidungssystem nach Anspruch 3,
**dadurch gekennzeichnet, daß**
das Hauptteil (6) des Dachverkleidungselements (3,3',3'') im vorderen Bereich des Fahrerhauses (1) angeordnet ist.

5. Innenverkleidungssystem nach einem der Ansprüche 2 bis 4,
**dadurch gekennzeichnet, daß**
ein weiteres Zusatzteil (9) vorgesehen ist, wobei zwischen dem Hauptteil (6) und dem weiteren Zusatzteil (9) eine weitere, senkrecht zu einer Hochrichtung (z) des Lastkraftwagens verlaufende Trennebene (10) vorgesehen ist.

6. Innenverkleidungssystem nach Anspruch 5,
**dadurch gekennzeichnet, daß**
das Hauptteil (6) des Dachverkleidungselements (3,3',3'') oberhalb des weiteren Zusatzteils (9) im oberen Bereich des Fahrerhauses (1) angeordnet ist.

7. Innenverkleidungssystem nach einem der Ansprüche 1 bis 6,
**dadurch gekennzeichnet, daß**
das Dachverkleidungselement (3,3',3'') ein Ablagefach (14) aufweist, in welches wahlweise mehrere DIN-Einbauschächte (15) einsetzbar sind.

8. Innenverkleidungssystem nach Anspruch 1,
**dadurch gekennzeichnet, daß**
das modulartig aufgebaute Verkleidungselement (3, 3', 3", 4, 5, 5', 5") das Rückwandverkleidungselement (5, 5', 5") ist.

9. Innenverkleidungssystem nach Anspruch 8,
**dadurch gekennzeichnet, daß**
das Rückwandverkleidungselement (5,5',5'') mit wenigstens einer Ausnehmung (22) für ein Rückfenster des Fahrerhauses (1) versehen ist.

10. Innenverkleidungssystem nach einem der Ansprüche 1 bis 9,
**dadurch gekennzeichnet, daß**
wenigstens eines der Verkleidungselemente (3, 3', 3", 4, 5, 5', 5") mit wenigstens einem Lautsprecher (11,20) versehen ist.

11. Innenverkleidungssystem nach einem der Ansprüche 1 bis 10,
**dadurch gekennzeichnet, daß**
wenigstens eines der Verkleidungselemente (3,3',3'',4,5,5',5'') mit wenigstens einem Beleuchtungskörper (13,17) versehen ist.

## Claims

1. System for the interior panels of drivers' cabins (1) of utility vehicles, in particular trucks, with a roof panel element (3, 3', 3''), the at least one side wall panel element (4) and a rear wall panel element (5, 5', 5''), with different types of the individual panel elements (3, 3', 3'', 4, 5, 5', 5'') being used for different sizes and/or shapes of the driver's cabin (1), and with the at least one of the panel elements (3, 3', 3", 4, 5, 5', 5") being designed in a modular manner with a main part (6) and at least one additional part (7) which can be fitted to the main part (6) in the region of a separating plane (8, 10) in an exchangeable manner.

2. System for the interior panels according to Claim 1, **characterized in that** the panel element (3, 3', 3", 4, 5, 5', 5") which is constructed in a modular manner is the roof panel element (3, 3', 3").

3. System for the interior panels according to Claim 2, **characterized in that** the separating plane (8) runs perpendicularly to a longitudinal direction (x) of the truck.

4. System for the interior panels according to Claim 3, **characterized in that** the main part (6) of the roof panel element (3, 3', 3") is arranged in the front region of the driver's cabin (1).

5. System for the interior panels according to one of Claims 2 to 4, **characterized in that** a further additional part (9) is provided, with a further separating plane (10) running perpendicularly to a vertical direction (z) of the truck being provided between the main part (6) and the further additional part (9).

6. System for the interior panels according to Claim 5, **characterized in that** the main part (6) of the roof panel element (3, 3', 3'') is arranged above the further additional part (9) in the upper region of the driver's cabin (1).

7. System for the interior panels according to one of Claims 1 to 6, **characterized in that** the roof panel element (3, 3', 3'') has a storage compartment (14) into which a plurality of DIN fitted shafts (15) can optionally be inserted.

8. System for the interior panels according to Claim 1, **characterized in that** the panel element (3, 3', 3'', 4, 5, 5', 5") which is constructed in a modular manner is the rear wall panel element (5, 5', 5'').

9. System for the interior panels according to Claim 8, **characterized in that** the rear wall panel element (5, 5', 5") is provided with at least one recess (22) for a rear window of the driver's cabin (1).

10. System for the interior panels according to one of Claims 1 to 9, **characterized in that** at least one of the panel elements (3, 3', 3", 4, 5, 5', 5") is provided with at least one speaker (11, 20).

11. System for the interior panels according to one of Claims 1 to 10, **characterized in that** at least one of the panel elements (3, 3', 3'', 4, 5, 5', 5'') is provided with at least one lighting fixture (13, 17).

## Revendications

1. Système de panneaux intérieurs pour cabine de chauffeur (1) de véhicules utilitaires, notamment de camions, avec un élément de panneau de toit (3, 3', 3''), au moins un élément de panneau de paroi latérale (4) et un élément de panneau de paroi arrière (5, 5', 5''), différents types de chaque élément de panneau (3, 3', 3", 4, 5, 5', 5") étant employés pour les différentes tailles et/ou formes de la cabine de chauffeur (1), au moins un des éléments de panneau (3, 3', 3'', 4, 5, 5', 5'') étant formé de manière modulaire avec une pièce principale (6) et au moins une pièce supplémentaire (7) pouvant être placée de manière à être changée sur la pièce principale (6) au niveau d'une zone de séparation (8, 10).

2. Système de panneaux intérieurs selon la revendication 1,
**caractérisé en ce que** l'élément de panneau monté de manière modulaire (3, 3', 3", 4, 5, 5', 5") est l'élément de panneau de toit (3, 3', 3").

3. Système de panneaux intérieurs selon la revendication 2,
**caractérisé en ce que** la zone de séparation (8) s'étend à la verticale par rapport à un sens longitudinal (x) du camion.

4. Système de panneaux intérieurs selon la revendication 3,
**caractérisé en ce que** la pièce principale (6) de l'élément de panneau de toit (3, 3', 3") est placée dans la partie avant de la cabine de chauffeur (1).

5. Système de panneaux intérieurs selon l'une des revendications 2 à 4,
**caractérisé en ce qu'**une autre pièce supplémentaire (9) est prévue, une autre zone de séparation (10) s'étendant à la verticale par rapport à un sens vers le haut (z) du camion étant prévue entre la pièce principale (6) et l'autre pièce supplémentaire (9).

6. Système de panneaux intérieurs selon la revendication 5,
**caractérisé en ce que** la pièce principale (6) de l'élément de panneau de toit (3, 3', 3'') est placée au-dessus de l'autre pièce supplémentaire (9) dans la zone supérieure de la cabine de chauffeur (1).

7. Système de panneaux intérieurs selon l'une des revendications 1 à 6, **caractérisé en ce que** l'élément de panneau de toit (3, 3', 3") présente un compartiment de réception (14) dans lequel plusieurs compartiments encastrés DIN (15) peuvent être placés au choix.

8. Système de panneaux intérieurs selon la revendication 1,
**caractérisé en ce que** l'élément de panneau monté de manière modulaire (3, 3', 3'', 4, 5, 5', 5'') est l'élément de panneau de paroi arrière (5, 5', 5'').

9. Système de panneaux intérieurs selon la revendication 8,
**caractérisé en ce que** l'élément de panneau de paroi arrière (5, 5', 5") est muni d'au moins un évidement (22) pour une vitre arrière de la cabine de chauffeur (1).

10. Système de panneaux intérieurs selon l'une des revendications 1 à 9,
**caractérisé en ce qu'**au moins un des éléments de panneau (3, 3', 3'', 4, 5, 5', 5'') est muni d'au moins un haut-parleur (11, 20).

11. Système de panneaux intérieurs selon l'une des revendications 1 à 10,
**caractérisé en ce qu'**au moins un des éléments de panneau (3, 3', 3", 4, 5, 5', 5'') est muni d'au moins un appareillage d'éclairage (13,17).
